# FASCICULE DE BREVET EUROPEEN

(11) **EP 1 697 672 B1**
(45) Date de publication et mention de la délivrance du brevet: **16.03.2011**
(21) Numéro de dépôt: 04805629.5
(22) Date de dépôt: 03.12.2004
(51) Int. Cl.: F16L 23/08

(54) **PROCEDE DE FABRICATION D'UN COLLIER DE SERRAGE**
METHODE ZUR HERSTELLUNG EINER KLEMMSCHELLE
METHOD OF MAKING A CLAMPING COLLAR

(30) Priorité: 04.12.2003 FR 0314235
(43) Date de publication de la demande: 06.09.2006
(73) Titulaire: Etablissements CAILLAU, 92130 Issy-les-Moulineaux (FR)
(72) Inventeur: GOULET, Jacky, F-41130 Selles-Sur-Cher (FR); FOUQUERAY, Cyriaque, F-41200 Romorantin (FR); RIGOLLET, Nicolas, F-41200 Romorantin (FR)
(74) Mandataire: Intès, Didier Gérard André
(86) Numéro de dépôt international: PCT/FR2004/003110
(87) Numéro de publication internationale: WO 2005/057071

(56) Documents cités:
- WO-A-98/43010
- DE-U- 29 816 889
- FR-A- 1 138 312
- GB-A- 447 963
- US-A- 5 720 086

## Description

L'invention concerne un collier de serrage qui comprend une ceinture avec deux oreilles redressées, et un ensemble vis-écrou susceptible d'être vissé pour rapprocher les deux oreilles l'une de l'autre et serrer ladite ceinture, et d'être dévissé pour permettre le desserrage de cette ceinture. L'invention concerne également un procédé de fabrication d'un tel collier.

Un collier de ce type sert par exemple à maintenir un tuyau autour d'un embout, ou à maintenir ensemble deux tubes joints bout à bout. En particulier, il peut s'agir d'un collier dont la ceinture présente un profil en creux pour retenir les deux tubes par des renflements de leurs extrémités. De tels colliers sont connus par EP 0 305 232, WO 98/43010 , WO 03/048624 et US 5,720,086.

Dans ces colliers de serrage connus la tête de vis coopère avec une oreille et l'écrou coopère avec l'autre oreille, de sorte que lorsqu'on visse l'écrou sur la tige de la vis, les oreilles serrées entre la tête et l'écrou se rapprochent l'une de l'autre. Le desserrage de ce type de collier nécessite cependant deux opérations distinctes : d'abord, dévisser l'écrou de la tige à l'aide d'un premier outil, et ensuite, écarter les deux oreilles l'une de l'autre au moyen d'un deuxième outil approprié pour ouvrir la ceinture du collier. En effet, bien que ladite ceinture présente une certaine élasticité, elle ne s'ouvre pas d'elle-même une fois l'ensemble vis-écrou dévissé (soit qu'elle ait été déformée plastiquement, soit qu'elle ait tendance à rester «bloquée» sur le ou les objets qu'elle serre), de sorte qu'il est nécessaire d'écarter lesdites oreilles pour desserrer totalement ledit collier. Le phénomène est d'autant plus marqué que la ceinture reste longtemps serrée autour des objets qu'elle entoure.

Ainsi, l'invention s'applique à un collier de serrage qui comprend une ceinture avec deux oreilles redressées, et un ensemble vis-écrou comprenant une vis avec tête de vis et tige filetée, et un écrou apte à coopérer avec cette tige, cet ensemble étant susceptible d'être vissé pour rapprocher les deux oreilles l'une de l'autre et serrer ledit collier et d'être dévissé pour permettre le desserrage de ce collier.

L'invention a pour but de proposer des procédés de fabrication de collier de serrage du type de ceux précédemment décrits.

Ainsi, selon un premier aspect, l'invention a pour objet un procédé de fabrication d'un collier de serrage, dans lequel on fournit une ceinture avec une première et une deuxième oreille redressées, et un ensemble vis-écrou comprenant une vis avec tête de vis et tige filetée, et un écrou apte à coopérer avec cette tige, et on assemble la ceinture et l'ensemble vis-écrou de telle sorte que ce dernier soit susceptible d'être vissé pour rapprocher les deux oreilles l'une de l'autre et serrer ledit collier, et d'être dévissé pour permettre le desserrage de ce collier, caractérisé en ce qu'on fournit, dans ledit ensemble vis-écrou, une vis dont la tige porte une excroissance située du côté de la tête de vis mais à distance de cette dernière, on introduit la tige de la vis à travers une ouverture de la première oreille de la ceinture de telle sorte que la tête de la vis et l'excroissance se trouvent de part et d'autre de la première oreille, et on déforme l'ouverture de ladite première oreille de manière à empêcher ladite excroissance de la traverser et à éviter ainsi un déplacement relatif entre ladite tige et ladite première oreille lors du dévissage de l'ensemble vis-écrou et en ce qu'on monte l'écrou sur la deuxième oreille de manière à éviter un déplacement relatif entre ledit écrou et ladite deuxième oreille lors de ce dévissage.

Cette invention a pour but de proposer un collier de serrage amélioré qu'il est possible de desserrer rapidement et simplement, en une seule opération.

Ce but est atteint, selon un premier aspect de l'invention, grâce à un collier de serrage qui comprend des premiers moyens d'arrêt pour limiter un déplacement relatif entre la tige de la vis et la première des deux oreilles lors du dévissage de l'ensemble vis-écrou, et des deuxièmes moyens d'arrêt pour limiter un déplacement relatif entre l'écrou et la deuxième oreille lors de ce dévissage, de sorte que, lors du dévissage, les première et deuxième oreilles s'écartent obligatoirement l'une de l'autre ; et en ce que la tige de la vis traverse une ouverture de la première oreille, les premiers moyens d'arrêt comprenant deux éléments d'arrêt, disposés sur cette tige de part et d'autre de la première oreille et aptes à retenir ladite première oreille entre eux, l'un de ces deux éléments d'arrêt comprenant une excroissance portée par la tige, et l'ouverture de la première oreille étant de forme oblongue, la largeur de cette ouverture étant suffisamment inférieure à la plus grande dimension radiale de ladite excroissance pour empêcher ladite excroissance de la traverser.

La forme oblongue de ladite ouverture est obtenue simplement, par déformation d'une ouverture circulaire.

Ce but est atteint de la même manière, selon un deuxième aspect de l'invention, grâce à un Collier de serrage comprenant des premiers moyens d'arrêt pour limiter un déplacement relatif entre la tige de la vis et la première des deux oreilles lors du dévissage de l'ensemble vis-écrou, et des deuxièmes moyens d'arrêt pour limiter un déplacement relatif entre l'écrou et la deuxième oreille lors de ce dévissage, et en ce que la tige de la vis traverse une ouverture de la première oreille, les premiers moyens d'arrêt comprenant deux éléments d'arrêt, disposés sur cette tige de part et d'autre de la première oreille et aptes à retenir ladite première oreille entre eux, l'un également de ces deux éléments d'arrêt comprenant un circlip disposé dans une gorge annulaire ménagée sur la tige de la vis.

Grâce à l'invention, il est possible de desserrer complètement ledit collier simplement en dévissant l'ensemble vis-écrou, c'est à dire en une seule opération, puisque le dévissage dudit ensemble entraîne l'ouverture de la ceinture. Ceci permet d'une part de gagner du temps, et d'autre part de réduire le nombre d'outils à utiliser.

En outre, les deux types d'éléments d'arrêt choisis : l'excroissance associée à l'ouverture oblongue ou le circlip associé à la gorge annulaire, sont de structure simple. Ces types d'éléments sont donc faciles et peu coûteux à fabriquer. De plus, mécaniquement, ils peuvent supporter des contraintes importantes lors du dévissage, ce qui garantit la solidité du système.

Avantageusement, lesdits éléments d'arrêt sont la tête de vis et ladite excroissance. Dans ce cas, la première oreille présente une ouverture dont la plus petite dimension radiale ou largeur, est supérieure au diamètre de la tige, mais inférieure aux plus grandes dimensions radiales de la tête de vis et de ladite excroissance. De cette manière, la tête de vis vient en butée contre cette oreille lors du vissage de l'ensemble vis-écrou, ce qui permet de serrer le collier, et ladite excroissance vient en butée contre cette oreille lors du dévissage de l'ensemble vis-écrou, ce qui permet d'ouvrir la ceinture et de desserrer le collier. Ainsi, on limite le déplacement relatif entre la tige de la vis et la première des deux oreilles lors du dévissage de l'ensemble vis-écrou, puisque ce déplacement relatif n'est plus possible une fois que ladite excroissance est en butée contre la première oreille.

Avantageusement, la distance axiale séparant les deux éléments d'arrêt est au moins égale à la largeur axiale de la première oreille, et au plus sensiblement égale à deux fois cette largeur. En tout état de cause, préférentiellement, la distance entre ces deux éléments d'arrêt est telle que la tige de la vis ne peut pratiquement pas être déplacée longitudinalement par rapport à la première oreille ou seulement être déplacée sur une faible distance. Ainsi, ladite distance axiale est de préférence supérieure de 1 ou 2 mm à la largeur axiale de l'oreille.

On notera que la direction radiale est définie comme étant la direction orthogonale à la direction axiale, elle-même définie par l'axe de la tige de la vis, et qu'une fois les éléments du collier assemblés, les ouvertures traversées toutes les deux par la tige de la vis sont sensiblement orientées suivant la direction radiale.

Avantageusement, les premiers moyens d'arrêt comprennent, en outre, une rondelle disposée entre la première oreille et la tête de vis. Cette rondelle permet d'abord d'éviter l'usure de la face de première oreille située en regard de la tête de vis, lorsqu'on fait tourner cette dernière. Ensuite, si ses dimensions radiales sont supérieures à celles de la tête de vis, cette rondelle permet de mieux répartir les contraintes exercées par la tête de vis sur l'oreille, lors du vissage. Enfin, on peut choisir la largeur axiale de la rondelle telle que la tête de vis soit maintenue à distance suffisante de la première oreille pour qu'un opérateur puisse tourner facilement cette tête au moyen d'un outil approprié, comme une clé en tube, sans être gêné par l'oreille. Selon ses dimensions, la rondelle pourra être assimilée à un manchon.

Selon un mode particulier de réalisation de l'invention, les deuxièmes moyens d'arrêt comprennent une extension, axiale, de l'écrou, qui est sertie sur la deuxième oreille. On empêche donc sensiblement le déplacement relatif entre la tige de la vis et la première des deux oreilles, lors du dévissage de l'ensemble vis-écrou, de sorte que l'écrou entraîne avec lui la deuxième oreille, ce qui permet d'ouvrir la ceinture, et ainsi de desserrer le collier.

Selon un autre mode particulier de réalisation de l'invention, les deuxièmes moyens d'arrêt comprennent une cage solidaire de la deuxième oreille, à l'intérieur de laquelle l'écrou est retenu. Soit cette cage est solidarisée directement à la première oreille, par exemple par soudage ou parce qu'elle est formée par des parties repliées de la deuxième oreille, soit elle chevauche la deuxième oreille. Lorsque la cage chevauche la deuxième oreille et l'écrou, elle présente deux ouvertures, ou deux entailles, ou une ouverture et une entaille, qui lui permettent d'être traversée par la tige de la vis.

La cage d'écrou est une pièce simple à fabriquer à partir d'un flanc et peut s'adapter sans difficulté sur un collier de type existant. Selon une variante, cette cage présente des côtés de sorte que l'écrou seul ou l'écrou et la deuxième oreille sont complètement entourés. Selon une autre variante, cette cage est simplement constituée par un flanc replié sur lui-même, sans côté.

Selon une variante de réalisation de l'invention, l'écrou est directement formé par un collet fileté réalisé dans la cage d'écrou, de sorte qu'aucun écrou supplémentaire n'est nécessaire.

Selon un mode différent de réalisation de l'invention, l'écrou est soudé à la deuxième oreille. Selon un autre mode de réalisation de l'invention, l'écrou consiste en un collet fileté, formé sur la deuxième oreille et apte à coopérer avec la tige filetée de la vis. Dans ces deux derniers modes de réalisation, le déplacement relatif entre l'écrou et la deuxième oreille est limité en ce sens qu'aucun déplacement relatif entre ces deux éléments n'est possible.

Avantageusement, l'écrou est bloqué en rotation par rapport à ladite deuxième oreille. De cette manière, il n'est pas nécessaire de maintenir l'écrou lors du vissage et du dévissage, qui s'opèrent dans ce cas en entraînant en rotation la tête de la vis.

Selon un autre aspect, l'invention a pour objet un procédé de fabrication d'un collier de serrage, dans lequel on fournit une ceinture avec une première et une deuxième oreille redressées, et un ensemble vis-écrou comprenant une vis avec tête de vis et tige filetée, et un écrou apte à coopérer avec cette tige, et on assemble la ceinture et l'ensemble vis-écrou de telle sorte que ce dernier soit susceptible d'être vissé pour rapprocher les deux oreilles l'une de l'autre et serrer ledit collier, et d'être dévissé pour permettre le desserrage de ce collier, dans lequel on fournit, fournit, dans ledit ensemble vis-écrou, une vis dont la tige présente une gorge annulaire située du côté de la tête de vis mais à distance de cette dernière, on introduit la tige à travers une ouverture de la première oreille de telle sorte que la tête de la vis et la gorge se trouvent de part et d'autre de la première oreille, et on dispose un circlip dans ladite gorge de manière à éviter un déplacement relatif entre ladite tige et ladite première oreille lors du dévissage de l'ensemble vis-écrou, et en ce qu'on monte l'écrou sur la deuxième oreille de manière à éviter un déplacement relatif entre ledit écrou et ladite deuxième oreille lors de ce dévissage.

Selon un mode particulier de mise en oeuvre du procédé, on fournit dans ledit ensemble vis-écrou un écrou qui présente une extension, on introduit ladite extension à travers une ouverture de la deuxième oreille, et on sertit ladite extension sur la deuxième oreille.

L'invention sera bien comprise et ses avantages apparaîtront mieux à la lecture de la description détaillée qui suit, de modes de réalisation représentés à titre d'exemples non limitatifs. La description se réfère aux dessins annexés sur desquels :
- La figure 1 est une vue en perspective des différents éléments constitutifs d'un collier de serrage selon un mode de réalisation de l'invention, avant montage ;
- La figure 1A est une vue en coupe de l'écrou représenté figure 1, prise dans le plan II-II ;
- La figure 2 est une vue en coupe selon le plan II-II du collier de serrage de la figure 1, après montage et à l'état desserré ;
- La figure 3 est une vue en perspective du collier de serrage de la figure 2, à l'état serré ;
- La figure 4 est une vue en coupe selon le plan IV-IV du collier de serrage de la figure 3, en train d'être desserré ;
- La figure 5 est une vue en coupe d'un collier de serrage selon un autre mode de réalisation de l'invention ; et
- La figure 5A est une vue en perspective de l'écrou et de la cage pour écrou du collier de la figure 5.
- La figure 6A est une vue en perspective d'une cage d'écrou montée sur une oreille de collier de serrage, les zones situées au voisinage de l'oreille du collier sont représentées avec des arrachements.
- La figure 6B représente la cage d'écrou de la figure 6A, seule.

Le collier de serrage désigné par la référence générale 10 sur les figures sert à assurer l'étanchéité entre un tube biconique métallique et un embout évasé métallique. Ce type de collier est utilisé par exemple dans l'industrie automobile, au niveau du système d'évacuation des gaz d'échappement.

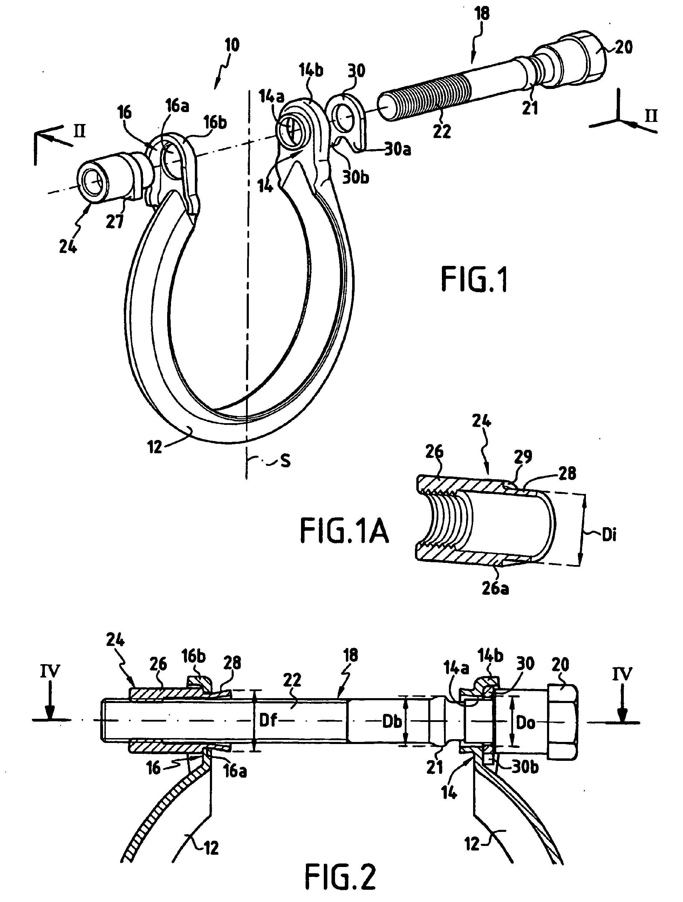

Le collier 10 comprend une ceinture 12, un ensemble vis-écrou 18-24, et une rondelle 30. Ces éléments sont représentés non assemblés sur la figure 1.

La ceinture 12 a sensiblement la forme générale d'un anneau ouvert dont les extrémités sont redressées vers l'extérieur de l'anneau, et forment des première et deuxième oreilles 14, 16. Cette ceinture 12 présente un plan de symétrie S perpendiculaire audit anneau, contenant son centre, et passant au milieu des deux oreilles. Les oreilles 14, 16 sont redressées de manière à être sensiblement parallèles entre elles lorsque la ceinture 12 est ouverte. Toutefois, elles pourraient être redressées de manière à être sensiblement parallèles entre elles une fois la ceinture 12 dans son état serré.

Les première et deuxième oreilles 14 et 16 présentent chacune une ouverture circulaire, respectivement 14a et 16a. Dans l'exemple représenté ces ouvertures sont de même diamètre Do. En outre, les bords extérieurs respectifs 14b et 16b des première et deuxième oreilles sont repliés et forment un rebord périphérique sur la face arrière de chaque oreille, de sorte qu'un logement est défini à l'arrière de chaque oreille. Les faces avant des oreilles sont définies comme état les faces des oreilles situées en regard l'une de l'autre.

La vis 18 comprend une tige 22 filetée sur une partie de sa longueur, et une tête de vis 20 à six pans. La tige 22 porte, entre sa partie filetée et la tête de vis 20, une excroissance formée par un bourrelet 21 de diamètre externe Db, entourant complètement la tige. Ce bourrelet 21 est par exemple formé par forgeage dans la tige avec laquelle il forme une seule pièce. On notera que le diamètre Db est inférieur au diamètre Do de l'ouverture circulaire 14a de la première oreille 14.

L'écrou 24, représenté en coupe figure 1A, a la forme générale d'un manchon et comprend un corps sensiblement cylindrique 26 prolongé par une extension 28 sensiblement de même diamètre interne que le corps 26, mais de diamètre externe Di inférieur, de sorte que la surface externe de l'écrou 24 présente un épaulement 29 dans la zone de jonction entre le corps 26 et l'extension 28. Le contour extérieur de la partie 26a du corps 26 située au niveau dudit épaulement 29 n'est pas complètement circulaire en raison de projections 27 qui donnent à un segment de ce contour une forme rectiligne raccordée par des angles au reste du contour. De plus, ce contour est adapté à celui du logement formé à l'arrière de la deuxième oreille 16, de sorte que, une fois la partie 26a du corps 26 disposée dans ce logement, les projections 27 sont susceptibles de venir en butée contre le bord 16b de l'oreille 16 pour empêcher la rotation de l'écrou 24. Par ailleurs, sur une partie de sa surface interne, le corps 26 porte un filetage apte à coopérer avec la portion de tige filetée de la vis 18. On notera que le diamètre externe Di de l'extension 28 est inférieur au diamètre Do de l'ouverture 16a de la deuxième oreille.

La rondelle 30 présente une ouverture de diamètre supérieur à celui de la tige 22 de la vis 18, et ses dimensions sont telles qu'elle peut se loger à l'intérieur du logement défini par le bord 14b de la première oreille 14. Sur sa périphérie, la rondelle 30 comprend deux pattes 30a et 30b qui définissent entre elles une zone dont la forme est complémentaire de celle du dos de la ceinture 12. Ainsi, on peut disposer la rondelle 30 à cheval sur le dos de la ceinture 12 et la bloquer en rotation par rapport à elle.

En référence aux figures 1 et 2, le montage du collier de serrage se déroule de la manière suivante.

D'abord on passe l'extension 28 de l'écrou 24 à travers l'ouverture 16a de la deuxième oreille 16. L'épaulement 29 vient alors en butée contre l'oreille 16. Puis, on solidarise l'écrou 24 à l'oreille 16 en sertissant l'extension 28 sur cette oreille, c'est à dire en évasant l'extrémité libre de ladite extension de sorte que son diamètre externe final Df soit supérieur au diamètre Do de l'ouverture 16b.

Ensuite, on dispose la rondelle 30 à l'intérieur du logement arrière de la première oreille 14, à cheval sur le dos de la ceinture 12. Puis, on passe la tige 22 de la vis 18 à travers l'ouverture de la rondelle 30, et des ouvertures 14a et 16a des première et deuxième oreilles 14, 16, jusqu'à ce qu'elle atteigne le filetage de l'écrou 24. Alors, on visse l'ensemble vis-écrou jusqu'à ce que le bourrelet 21 franchisse l'ouverture circulaire 14a de la première oreille 14.

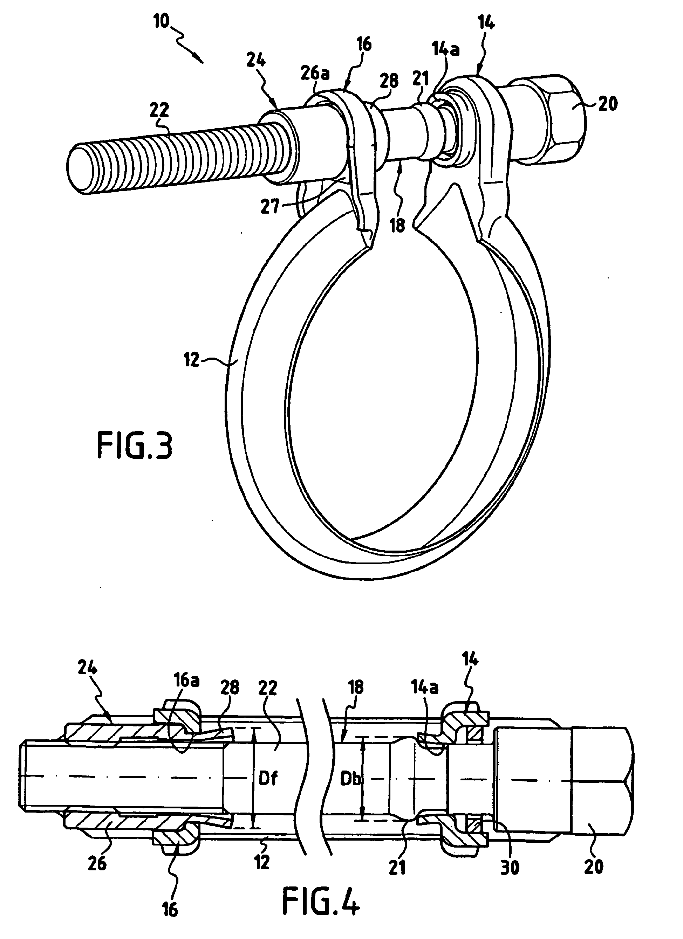

Enfin, on déforme l'ouverture circulaire 14a de la première oreille 14 en la pinçant, par quoi on obtient une ouverture oblongue dont la largeur est inférieure au diamètre Db du bourrelet 21, comme représenté figure 3. En outre, la forme oblongue permet à la tige 22 de pouvoir se déplacer suivant l'axe longitudinal de l'ouverture 14a. Cette liberté de mouvement permet de modifier le positionnement de la vis lors du serrage du collier.

Pour serrer le collier, il suffit de tourner la tête de vis 20 au moyen d'un outil approprié tel qu'une clé en tube. L'écrou 24 étant bloqué en rotation grâce aux projections 27 venant en butée contre le bord 16b de l'oreille 16, il n'est pas nécessaire de le maintenir.

Lorsqu'on visse l'ensemble vis-écrou, la tête de la vis 20 vient en butée contre la rondelle 30, elle-même en butée contre la première oreille 14, tandis que l'épaulement 29 de l'écrou 24 vient en butée contre la deuxième oreille 16, de sorte que l'écrou 24 entraîne avec lui la deuxième oreille 16, en direction de la première oreille 14. On serre ainsi la ceinture 12, et donc le collier 10. La rondelle 30 étant bloquée en rotation grâce à ses pattes 30a et 30b, les frottements liés à la rotation de la tête de vis 20 ont lieu à l'interface entre ladite tête 20 et la rondelle 30, de sorte que la première oreille 14 est protégée.

Par ailleurs, le contour de la rondelle 30 épouse la forme du logement arrière de l'oreille 14, de sorte que les contraintes liées au serrage sont réparties sur toute la surface de cette oreille 14. De la même manière, les contraintes liées au serrage sont réparties sur toute la surface de la deuxième oreille 16 grâce à la forme de la partie 26a de l'écrou 24, qui épouse la forme du logement arrière de l'oreille 16.

Lorsqu'on dévisse l'ensemble vis-écrou, comme représenté figure 4, le bourrelet 21 vient en butée sur les bords de l'ouverture oblongue 14a de la première oreille 14, tandis que l'écrou 24 solidaire de la deuxième oreille 16 par le biais de son extension 28 sertie sur cette oreille 16, s'éloigne de la première oreille 14 et entraîne avec lui la deuxième oreille 16. On ouvre ainsi la ceinture 12, et on desserre le collier 10. On notera que l'écrou 24 bloqué en rotation n'a pas besoin d'être maintenu.

Pour diminuer le couple de forces nécessaire au dévissage, la ceinture 12 peut présenter une certaine élasticité.

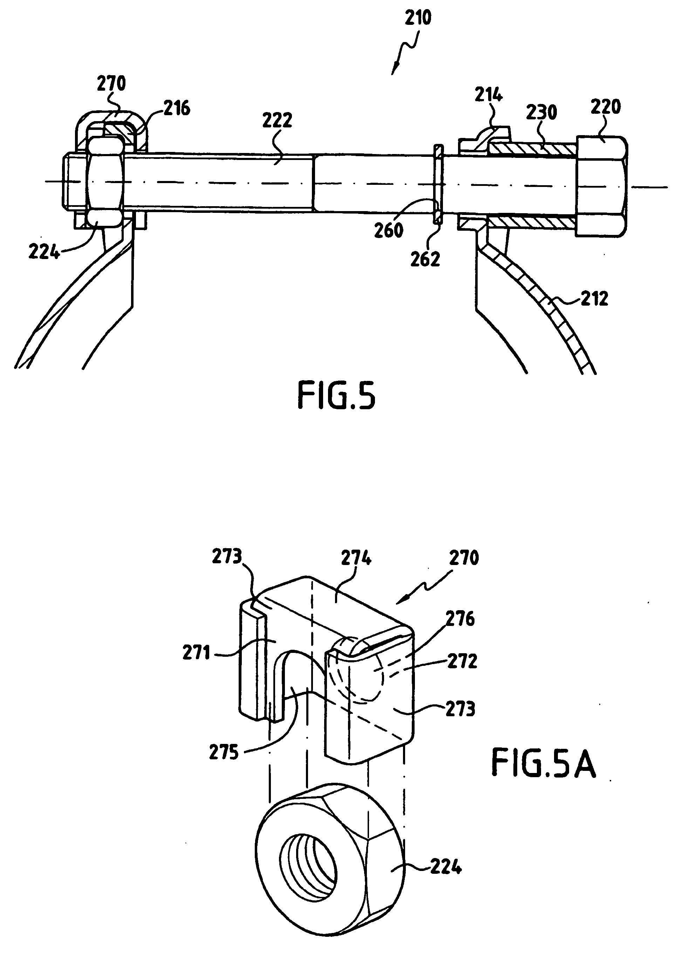

En référence aux figures 5 et 5A, on va maintenant décrire un collier de serrage 210 selon un autre mode de réalisation de l'invention. Les éléments analogues à ceux des figures 1 à 4 sont affectés des mêmes références numériques augmentées de 200. La ceinture 212 est sensiblement identique à celle précédemment décrite. La vis 218 comprend une tige 222 et une tête de vis 220 à pans. Une gorge annulaire 260 apte à recevoir un circlip 262 est ménagée sur la tige 222.

Les premiers moyens d'arrêt pour limiter un déplacement relatif entre la tige 222 de la vis 218 et la première des deux oreilles 214, comprennent la tête de vis 220, une rondelle 230, et l'excroissance formée par le circlip 262. Les deuxièmes moyens d'arrêt pour limiter un déplacement relatif entre l'écrou 224 et la deuxième oreille 216 lors du dévissage comprennent une cage d'écrou 270.

La dimension axiale de la rondelle 230 est choisie de sorte que l'écartement entre la tête de vis 220 et l'oreille 214 est suffisamment important pour permettre de tourner facilement cette tête 220 au moyen d'une clé en tube ou d'une clé plate, sans être gêné par la première oreille 214. Dans l'exemple représenté, la largeur axiale de la rondelle 230 est supérieure à son diamètre, de sorte que cette rondelle est plutôt assimilable à un manchon.

La cage d'écrou 270 est fabriquée à partir d'un flanc replié sur lui-même. Elle à la forme générale d'un parallélépipède rectangle et comprend une paroi avant 271, une paroi arrière 272, deux parois latérales 273, une paroi supérieure 274, mais pas de paroi de fond. Une entaille 275 entame le bord libre inférieur de la paroi avant 271. Le fond de cette entaille 275 est circulaire et est apte à venir en appui sur la tige 222 de la vis 270. En outre, une ouverture circulaire 276 apte à être traversée par la tige 222 de la vis 218 est ménagée dans la paroi arrière 272, en regard de l'entaille 275.

Cette cage 270 est apte à recevoir l'écrou 224, et ses dimensions sont telles que le jeu entre les parois latérales 273 et les pans de l'écrou 224 est suffisant pour permettre à l'écrou 224 d'entrer dans la cage, mais insuffisant pour qu'il puisse tourner à l'intérieur de la cage 270 une fois entré.

Le montage du collier de serrage 110 se déroule comme suit.

D'abord on enfile la rondelle 230 sur la vis 218. Puis, on passe la vis 218 à travers des ouvertures des oreilles 214 et 216. Ensuite, on visse l'écrou 224 sur la vis 218, en faisant attention que l'extrémité de la tige 222 de la vis ne dépasse pas hors de l'écrou 224. On positionne alors la cage 270 de manière à ce qu'elle chevauche l'écrou 224 et l'oreille 216, le fond de l'entaille 275 venant en appui sur une portion de la tige 222, la paroi arrière 272 de la cage 270 venant au contact de l'écrou 224, et l'ouverture 276 venant en regard de la portion de tige logée dans l'écrou 224. On peut ensuite continuer de visser l'ensemble vis-écrou jusqu'à ce que la gorge 260 passe de l'autre côté de l'oreille 214 par rapport à la tête de vis 220. Enfin, on dispose le circlip 262 dans la gorge 260.

Pour serrer le collier 210, on visse l'ensemble vis-écrou, l'écrou étant bloqué en rotation par les parois latérales 273 de la cage 270. Lors du desserrage, le circlip 262 vient en butée contre l'oreille 214 et la cage 270 solidaire de l'oreille 216 retient l'écrou 224, tout en le bloquant en rotation, de sorte que les oreilles 214 et 216 s'écartent et le collier 210 se desserre.

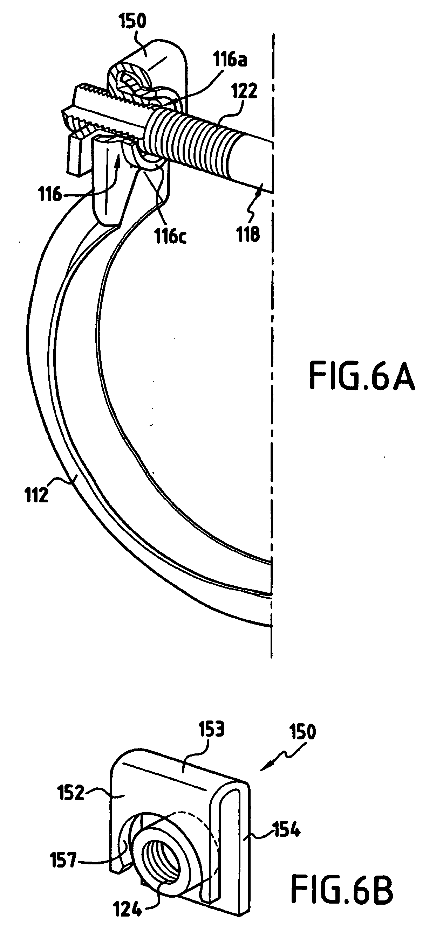

Les figures 6A et 6B représentent un autre exemple de réalisation de cage d'écrou.

La cage d'écrou 150 représentée, est formé par un flanc replié sensiblement en forme de U et comprend une base 153 et deux branches 152, 154 sensiblement parallèles entre elles et perpendiculaires à la base 153. La largeur de la base 153 est suffisante pour permettre à la cage 150 de chevaucher la deuxième oreille 116 du collier.

On notera que la face avant de la deuxième oreille 116 comprend à la périphérie de son ouverture 116a, un rebord 116c circulaire de largeur suffisante pour former une surface d'appui. La première branche 152 de la cage 150 présente une entaille 157 qui entame son bord d'extrémité libre, opposé à la base 153. Le fond de cette entaille 157 est sensiblement circulaire, de manière à pouvoir entourer partiellement le rebord 116c. Avantageusement les bords de l'entaille 157 sont chanfreinés de manière à faciliter l'engagement du rebord 116c à l'intérieur de cette entaille.

La cage 150 comprend également un collet fileté qui forme écrou 124. Ce collet est orienté vers l'intérieur de la cage 150, de sorte qu'une fois la cage mise en place sur la deuxième oreille 116, il vient se loger à l'intérieur de l'ouverture 116a de l'oreille.

## Revendications

1. Procédé de fabrication d'un collier de serrage, dans lequel on fournit une ceinture (12) avec une première (14) et une deuxième oreille (16) redressées, et un ensemble vis-écrou comprenant une vis (18) avec tête de vis (20) et tige filetée (22), et un écrou (24) apte à coopérer avec cette tige (22), et on assemble la ceinture (12) et l'ensemble vis-écrou de telle sorte que ce dernier soit susceptible d'être vissé pour rapprocher les deux oreilles (14, 16) l'une de l'autre et serrer ledit collier (12), et d'être dévissé pour permettre le desserrage de ce collier (14, 16),
dans lequel on fournit, dans ledit ensemble vis-écrou, une vis (18) dont la tige (22) porte une excroissance (21) située du côté de la tête de vis (20) mais à distance de cette dernière,
et dans lequel on monte l'écrou (24) sur la deuxième oreille (16) de manière à éviter un déplacement relatif entre ledit écrou (24) et ladite deuxième oreille (16) lors du dévissage de l'ensemble vis-écrou,
**caractérisé en ce qu'**on introduit la tige (22) de la vis (18) à travers une ouverture (14a) non encore déformée de la première oreille (14) de la ceinture (12) de telle sorte que la tête de la vis (18) et l'excroissance (21) se trouvent de part et d'autre de la première oreille (14), et on déforme l'ouverture (14a) de ladite première oreille (14) de manière à empêcher ladite excroissance (21) de la traverser et à éviter ainsi un déplacement relatif entre ladite tige (22) et ladite première oreille (14) lors du dévissage de l'ensemble vis-écrou.

2. Procédé selon la revendication 1, dans lequel on fournit, dans ledit ensemble vis-écrou, un écrou (24) qui présente une extension (28), et dans lequel on introduit ladite extension (28) à travers une ouverture (16a) de la deuxième oreille (16), et on sertit ladite extension (28) sur la deuxième oreille (16).

3. Procédé selon la revendication 1, dans lequel le collier présente une cage (150, 270) solidaire de la deuxième oreille (116, 216), à l'intérieur de laquelle l'écrou (124, 224) est retenu.

4. Procédé selon la revendication 1, dans lequel on soude l'écrou (24) à la deuxième oreille (16).

5. Procédé selon la revendication 1, dans lequel l'écrou (24) consiste en un collet fileté, formé sur la deuxième oreille (16) et apte à coopérer avec la tige filetée (22) de la vis (18).

6. Procédé selon l'une quelconque des revendications précédentes, dans lequel l'écrou (24) est bloqué en rotation par rapport à la deuxième oreille (16).

7. Procédé selon l'une quelconque des revendications précédentes, dans lequel la tête de vis (20) et l'excroissance (21) sont suffisamment distantes l'une de l'autre pour autoriser, avant serrage, un déplacement relatif entre la tige (22) de la vis et la première oreille (14), suivant l'axe de ladite tige.

8. Procédé selon l'une quelconque des revendications précédentes, dans lequel on dispose une rondelle entre la première oreille (14) et la tête de vis (20).

## Claims

1. A method of manufacturing a clamping collar, in which there is provided a ring (12) with a first (14) and a second (16) upstanding lug, and a screw-and-nut assembly including a screw (18) with screw head (20) and threaded post (22), and a nut (24) designed to cooperate with this post (22), and the ring (12) and the screw-and-nut assembly are assembled so that the latter is capable of being screwed so as to bring the two lugs (14, 16) closer together thereby tightening said collar (12), and of being unscrewed so as to enable the collar (14, 16) to be loosened,
in which there is provided, in said screw-and-nut assembly, a screw (18) of which the post (22) carries a protuberance (21) located on the side of the screw head (20) but at a distance therefrom, and
in which the nut (24) is mounted on the second lug (16) so as to prevent a relative movement between said nut (24) and said second lug (16) during unscrewing of the screw-and-nut assembly,
the method being **characterized in that** the post (22) of the screw (18) is inserted through an opening (14a) that is not yet deformed in the first lug (14) of the ring (12) so that the head of the screw (18) and the protuberance (21) are located on each side of the first lug (14), and the opening (14a) of said first lug (14) is deformed so as to prevent said protuberance (21) from passing therethrough and thus prevent a relative movement between said post (22) and said first lug (14) during unscrewing of the screw-and-nut assembly.

2. A method according to claim 1, in which there is provided in said screw-and-nut assembly a nut (24) which presents an extension (28), and in which said extension (28) is introduced through an opening (16a) in the second lug (16), and said extension (28) is crimped onto the second lug (16).

3. A method according to claim 1, in which the collar includes a cage (150, 270) integral with the second lug (116, 216), inside which the nut (124, 224) is retained.

4. A method according to claim 1, in which the nut (24) is welded to the second lug (16).

5. A method according to claim 1, in which the nut (24) consists of a threaded collet, formed on the second lug (16) and designed to cooperate with the threaded post (22) of the screw (18).

6. A method according to any one of the preceding claims, in which the nut (24) is rotationally locked relative to the second lug (16).

7. A method according to any one of the preceding claims, in which the screw head (20) and the protuberance (21) are at sufficient distance from one another so as to allow for a relative movement between the post (22) of the screw and the first lug (14), along the axis of said post, before clamping.

8. A method according to any one of the preceding claims, in which a washer is disposed between the first lug (14) and the screw head (20).

## Patentansprüche

1. Verfahren zur Herstellung einer Klemmschelle, wobei ein Ring (12) mit einer aufgerichteten ersten Öse (14) und einer aufgerichteten zweiten Öse (16) sowie eine Schraube-Mutter-Anordnung, welche eine Schraube (18) mit Schraubenkopf (20) und Gewindeschaft (22) sowie eine Mutter (24), welche geeignet ist, mit diesem Schaft (22) zusammenzuwirken, umfaßt, bereitgestellt wird und der Ring (12) sowie die Schraube-Mutter-Anordnung derart miteinander verbunden werden, daß letztere geeignet ist, festgeschraubt zu werden, um die beiden Ösen (14, 16) einander zu nähern und die Schelle (12) festzuziehen, und gelöst zu werden, um das Lösen dieser Schelle (14, 16) zu ermöglichen,
wobei bei der Schraube-Mutter-Anordnung eine Schraube (18) bereitgestellt wird, deren Schaft (22) eine Ausstülpung (21) trägt, die auf der Seite des Schraubenkopfes (20), aber im Abstand von letzterem gelegen ist, und
wobei die Mutter (24) an der zweiten Öse (16) angebracht wird, um beim Lösen der Schraube-Mutter-Anordnung eine Relativbewegung zwischen der Mutter (24) und der zweiten Öse (16) zu vermeiden,
**dadurch gekennzeichnet, daß** der Schaft (22) der Schraube (18) derart durch eine noch nicht verformte Öffnung (14a) der ersten Öse (14) des Rings (12) eingeführt wird, daß der Kopf der Schraube (18) und die Ausstülpung (21) sich auf beiden Seiten der ersten Öse (14) befinden, und die Öffnung (14a) der ersten Öse (14) verformt wird, so daß die Ausstülpung (21) daran gehindert wird, diese zu durchgreifen, und auf diese Weise eine Relativbewegung zwischen dem Schaft (22) und der ersten Öse (14) beim Lösen der Schraube-Mutter-Anordnung vermieden wird.

2. Verfahren nach Anspruch 1, wobei bei der Schraube-Mutter-Anordnung eine Schraube (24) bereitgestellt wird, die eine Erweiterung (28) aufweist, und wobei die Erweiterung (28) durch eine Öffnung (16a) der zweiten Öse (16) eingeführt wird und die Erweiterung (28) an der zweiten Öse (16) gebördelt wird.

3. Verfahren nach Anspruch 1, wobei die Schelle einen mit der zweiten Öse (116, 216) fest verbundenen Käfig (150, 270) aufweist, in dem die Mutter (124, 224) gehalten ist.

4. Verfahren nach Anspruch 1, wobei die Mutter (24) an die zweite Öse (16) geschweißt wird.

5. Verfahren nach Anspruch 1, wobei die Mutter (24) aus einem gewindeten Kragen besteht, der an der zweiten Öse (16) gebildet und geeignet ist, mit dem Gewindeschaft (22) der Schraube (18) zusammenzuwirken.

6. Verfahren nach einem der vorhergehenden Ansprüche, wobei die Mutter (24) gegenüber der zweiten Öse (16) gegen ein Drehen festgelegt ist.

7. Verfahren nach einem der vorhergehenden Ansprüche, wobei der Schraubenkopf (20) und die Ausstülpung (21) weit genug voneinander beabstandet sind, um vor dem Festziehen eine Relativbewegung zwischen dem Schaft (22) der Schraube und der ersten Öse (14) entlang der Achse des Schaftes zuzulassen.

8. Verfahren nach einem der vorhergehenden Ansprüche, wobei zwischen der ersten Öse (14) und dem Schraubenkopf (20) eine Unterlegscheibe angeordnet wird.
